# EUROPÄISCHE PATENTSCHRIFT

(11) **EP 0 766 750 B1**
(45) Veröffentlichungstag und Bekanntmachung des Hinweises auf die Patenterteilung: **31.01.2001**
(21) Anmeldenummer: 96910845.5
(22) Anmeldetag: 23.04.1996
(51) Int. Cl.: C22B 7/02, C21B 13/14, C21C 5/28

(54) **VERFAHREN ZUM VERWERTEN VON EISENHÄLTIGEN HÜTTENRESTSTOFFEN SOWIE ANLAGE ZUR DURCHFÜHRUNG DES VERFAHRENS**
PROCESS AND PLANT FOR RECYCLING IRON-CONTAINING RESIDUES FROM THE STEEL AND IRON INDUSTRY
PROCEDE ET INSTALLATION DE RECYCLAGE DE RESIDUS FERREUX DE L'INDUSTRIE METALLURGIQUE

(30) Priorität: 24.04.1995 AT 70195
(43) Veröffentlichungstag der Anmeldung: 09.04.1997
(73) Patentinhaber: VOEST-ALPINE INDUSTRIEANLAGENBAU GMBH, 4020 Linz (AT)
(72) Erfinder: LEHNER, Johann, A-4020 Linz (AT); SCHREY, Günter, A-4040 Linz (AT)
(74) Vertreter: Kopecky, Helmut, Dipl.-Ing. Kopecky & Schwarz Patentanwälte
(86) Internationale Anmeldenummer: AT9600079
(87) Internationale Veröffentlichungsnummer: WO9634120

(56) Entgegenhaltungen:
- EP-A- 0 467 874
- EP-A- 0 623 684
- US-A- 3 948 644
- US-A- 4 119 455
- US-E- R E30 795

## Beschreibung

Die Erfindung betrifft ein Verfahren zum Verwerten von eisenhältigen Hüttenreststoffen, die von eisenhältige Partikel enthaltenden Abgasen im Naßverfahren ausgewaschen und in Form von Schlämmen abgeschieden werden, wobei die Schlämme entwässert und agglomeriert werden und die Agglomerate in einem Ofen zur Stahlerzeugung verwertet werden, sowie eine Anlage zur Durchführung des Verfahrens.

Es ist für ein Direktreduktionsverfahren von Eisenerz mit nachfolgendem Einschmelzen von Eisenschwamm unter gleichzeitiger Kohlevergasung bekannt (AT-B - 376.241), in erster Linie aus staubförmigem Kohlenstoff bestehende Feststoffpartikel aus dem in einer Einschmelzvergasungszone gebildeten Reduktionsgas sowie aus dem beim Direktreduzieren entstehenden Abgas abzuscheiden, die abgeschiedenen Feststoffpartikel mit Bindemittel, u.a. mit Eisenoxidstaub, zu versetzen, zu Formkoks heilt zu brikettieren und den Formkoks anschließend dem Einschmelzprozeß wiederum zuzuführen.

Nachteilig ist jedoch hierbei, daß infolge des Einbringens von Eisenoxiden im Einschmelzvergaser Reduktionsarbeit geleistet werden muß, um das Eisenoxid zu reduzieren, wodurch für den Einschmelzvorgang benötigte Energie diesem entzogen wird und eine Störung des in der Einschmelzvergasungszone ablaufenden Prozesses stattfindet. Weiters stellt die genannte Heißbrikettierung im Hinblick auf die Investitions- und Betriebskosten eine aufwendige Lösung dar.

Aus der DE-A - 41 23 626 ist es bekannt, Hüttenreststoffe gemischter Konsistenz zu agglomerieren, u.zw. unter Zuhilfenahme von Bindemitteln, Schlackenbildnern und Reduktionsmitteln, und die Agglomerate in den oberen Möllerbereich eines Schmelzaggregates einzubringen, wobei die Vorwärmung und Trocknung der Agglomerate in diesem Möllerbereich des Schmelzaggregates erfolgt. Der Möller durchsetzt das Schmelzaggregat nach dem Gegenstromprinzip, wobei er zunächst in einen im Inneren des Schmelzaggregates vorgesehenen Reduktionsbereich gelangt und anschließend im unteren Bereich des Schmelzaggregates geschmolzen wird.

Dieses bekannte Verfahren ist insofern energieaufwendig, als auch metallische Abfall- oder Reststoffe den Reduktionsbereich des Schmelzaggregates durchwandern müssen. Ein besonderes Problem stellt hierbei die Festigkeit der Agglomerate dar, da diese Agglomerate noch im Grünzustand, also nicht fertig getrocknet, eingesetzt werden, was in der Praxis große Schwierigkeiten durch Zerfall, Abrieb etc. verursacht. Beim Durchwandern des Schmelzaggregates nach dem Gegenstromprinzip kann es bei durch Druck- und Stoßkräfte verursachte Zerstörungen der Agglomerate zu einem Austragen eines hohen Anteiles derselben aus dem Schmelzuggregat durch das Abgas kommen. Aus diesem Grund ist das aus der DE-A - 41 23 626 bekannte Verfahren in der Praxis nur schwer verwirklichbar. Es müßten Agglomerate mit einer hohen Festigkeit, die auch im hohen Temperaturbereich gegeben sein müßte, hergestellt werden, was jedoch wiederum sehr aufwendig ist und insbesondere den Einsatz hochwertiger und entsprechend teurer Bindemittel erfordern würde.

Aus der AT-B - 380,901 ist es bekannt, metalloxidhältige Hüttenstäube zusammen mit kohlenstoffhältigem Material durch ein rotierendes Rohr zu fördern, in einer heißen Zone des Rohres zu reduzieren und Eisenschwamm zu bilden und diesen Eisenschwamm in einen Konverter als Ersatz von Kühlschrott einzusetzen. Dieses Verfahren hat sich bei metalloxidhältigen Hüttenstäuben bewährt, erfordert jedoch einen zusätzlichen apparativen und verfahrenstechnischen Aufwand zur Einstellung einer reduzierenden Atmosphäre. Zudem können lediglich metalloxidhältige Hüttenstäube mit diesem Verfahren verwertet werden; für einen Einsatz von in größerem Ausmaß metallisches Eisen enthaltenden Stäuben ist dieses Verfahren nicht vorgesehen.

Ein Verfahren der eingangs beschriebenen Art ist aus der EP-A - 0 623 684 bekannt. Hierbei gelingt eine vollständige und energiesparende Verwertung von Abfall- und Reststoffen der Hüttenindustrie bei einem Verfahren zur Direktreduktion von Eisenerz zu Eisenschwamm und dem Einschmelzen des Eisenschwammes in einer Kohlevergasungszone, wobei es jedoch erforderlich ist, die Abfall- bzw. Reststoffe nach ihrer chemischen Zusammensetzung in Gruppen getrennt zu sammeln. Eine erste Gruppe beinhaltet hauptsächlich Eisen in oxidischer Form, eine zweite Gruppe Eisen in metallischer Form und eine dritte Gruppe hauptsächlich kohlenstoffhältige Stoffe. Die erste Gruppe wird in die Direktreduktionszone und die zweite und dritte Gruppe direkt in die Einschmelzvergasungszone eingesetzt, wobei vor dem Einsatz ein Eindicken und Granulieren der in Form von Schlämmen anfallenden Abfall- und Reststoffe durchgeführt wird.

Bei diesem bekannten Verfahren ist in erster Linie daran gedacht, die beim Direktreduzieren bzw. Einschmelzen und bei der Kohlevergasung in den Abgasen anfallenden Stäube wiederum der Direktreduktion bzw. dem Einschmelzprozeß und Kohlevergasungsprozeß zuzuführen. Dies ist insoferne aufwendig, als die Agglomerate wiederum denselben Prozessen zugeführt werden, aus denen sie entstammen. Sie müssen dort also wiederum aufgeheizt werden und durchlaufen diese Prozesse sozusagen ein zweites Mal und können erst anschließend in einem Folgeprozeß, z.B. einem Prozeß zur Herstellung von Stahl aus Roheisen, weiterverarbeitet werden.

Es ist allgemein bekannt, beim Hochofenprozeß, Sauerstoffblasprozeß bzw. beim Direktreduzieren von Eisenerz zu Eisenschwamm anfallende Stäube im Naßverfahren aus den bei diesen Verfahren sich bildenden Abgasen abzuscheiden und die dabei gebildeten Schlämme zu trocknen, jedoch werden die Schlämme meist aus Gründen des geringen Aufwandes anschließend auf Deponie gelegt. Dies hat man bisher in Kauf genommen, da diese Schlämme (als Trockensubstanz) gewichtsmäßig nur etwa 1,5 % der produzierten Stahlmenge ausmachen. Mit zunehmendem Umweltbewußtsein tritt nunmehr verstärkt die Forderung nach Vermeidung solcher Deponien auf Dies ist jedoch mit Schwierigkeiten verbunden, da die Verwertung der Stäube in der Hüttenindustrie derzeit - wie oben dargelegt - einen hohen Aufwand, wie eine Selektion, erfordert und die Stäube oft wiederum mit Abgasen ausgetragen werden.

Aus der US-E - RE 30,795 ist es bekannt, eisenhältige Hüttenstäube, z.B. aus einem Sauerstoffblaskonverter, nach Naßabscheidung und Eindickung der Schlämme sprühzutrocknen und das so erhaltene Material nach Zerbrechen mit Wasser zu kugelförmigem Material zu agglomerieren und dem Sauerstoffblaskonverter wieder zuzuführen.

Ein Verfahren zur Wiederverwertung von Stäuben aus Konverterabgasen ist aus der EP-A - 0 467 874 bekannt. Dabei werden die Stäube nach Abziehen über einen Drehrohrofen ausschließlich trocken abgeschieden und in Form von Pellets wieder dem Konverter zugeführt.

Der Erfindung liegt die Aufgabe zugrunde, eisenhaltige Hüttenreststoffe, bei denen Eisen sowohl in metallischer als auch in oxidischer Form vorliegen kann, unter möglichst geringem Energieaufwand und unter einem nur geringe Investitionen erfordernden apparativen Aufwand wirkungsvoll zu verwerten, nämlich unter Rückgewinnung des in diesen Hüttenreststoffen enthaltenen Eisens, wobei nach Möglichkeit in der Praxis bereits bewährte Technologien Verwendung finden können. Insbesondere soll vermieden werden, daß die Stäube bei der Stahlerzeugung hintereinander vorgesehene Prozeßstufen mehrmals durchlaufen und diese zusätzlich belasten.

Diese Aufgabe wird erfindungsgemäß dadurch gelöst, daß die Schlämme auf einen Restfeuchtegehalt von 30 bis 50 Gew.% freies Wasser entwässert, mit Branntkalk gemischt, direkt in eine Granulationseinrichtung aufgegeben und granuliert werden und schließlich ausschließlich in einem nach dem Sauerstoffblasverfahren ablaufenden Frischprozeß zur Herstellung von Stahl aus Roheisen sowie gegebenenfalls Schrott und/oder Eisenerz und/oder Eisenschwamm eingesetzt und verwertet werden.

Hierdurch gelingt es, neben einer einfach durchzuführenden Aufarbeitung sämtlicher eisenhältiger Staub-Reststoffe die für einen Sauerstoffblasprozeß zur Kühlung notwendigen Materialien, wie Eisenschrott und/oder Eisenschwamm und/oder Eisenerz, die je nach wirtschaftlicher Situation und geographischer Lage des Hüttenwerkes oft teuer erworben werden müssen oder auch fallweise gar nicht vorhanden sind, durch das Agglomerat zumindest teilweise zu ersetzen, d.h. im Ausmaß der Menge der eingesetzten Agglomerate zu reduzieren. Erfindungsgemäß werden die Stäube in einer Prozeß-Endstufe eingesetzt, so daß vorgeordnete Prozeßstufen, wie eine Direktreduktion oder ein Hochofenprozeß, durch die Stäube nicht belastet sind, u.zw. sowohl mengenmäßig als auch prozeßmäßig.

Vorteilhaft erfolgt erfindungsgemäß ein Verwerten von in beim Direktreduzieren von Eisenerz zu Eisenschwamm und beim Einschmelzen von Eisenschwamm unter gleichzeitiger Kohlevergasung entstehenden Abgasen enthaltenen Stäuben.

Weiters erfolgt erfindungsgemäß zweckmäßig ein Verwerten von in beim Frischen nach dem Sauerstoffblasverfahren entstehenden Abgasen enthaltenen Stäuben sowie gegebenenfalls ein Verwerten von in bei einem Hochofenprozeß entstehenden Abgasen enthaltenen Stäuben

Von besonderer Bedeutung ist hierbei die Aufbereitung der Hüttenreststoffe in der Art und Weise, daß sie für den Sauerstoffblasprozeß im Konverter, ohne eine Störung desselben zu verursachen, eingesetzt werden können. Hierfür ist eine besondere Festigkeit der agglomerierten Stäube erforderlich, so daß diese für den im Konverter stattfindenden Hochtemperatur-Frischprozeß eingesetzt werden können.

Vorzugsweise werden die Schlämme vor einer Weiterbehandlung auf einen Restfeuchtegehalt von 32 bis 42 Gew.% freies Wasser entwässert.

Gemäß einer bevorzugten Ausführungsform wird den Schlämmen mit dem Granulieren Branntkalk in körniger Form bis 1 mm Durchmesser, zugesetzt, wobei der Branntkalk vorteilhaft in einer Menge zugegeben wird, bei der eine vollständige Umsetzung desselben durch das im entwässerten Schlamm enthaltene freie Wasser stattfindet. Der bevorzugte Bereich des Restfeuchtegehaltes des Schlammes hat einen mengenmäßig günstigen Verbrauch an Branntkalk zur Folge.

Vorteilhaft wird nach dem Granulieren eine Trocknung bis zu einer Restfeuchte von maximal 5 Gew.% freies Wasser durchgeführt, wodurch sich eine für den Einsatz in einem Konverter genügend große Festigkeit der durch Granulieren gebildeten Teilchen einstellt. Ein Zerfall der Granulate findet selbst im Hochtemperaturbereich des Konverters nicht statt, so daß der Staubaustrag aus dem Konverter durch das Einbringen der Granulate keinesfalls erhöht wird.

Zufolge einer Rezirkulation der festen Anteile des Schlammes kann es für einzelne Stoffkomponenten zu verschieden hohen Aufkonzentrationen bzw. Anreicherungen im Staub bzw. im Schlamm kommen. Z.B. werden Zink, Blei oder auch Alkalien, wie Natrium, in einem metallurgischen Schmelzprozeß immer wieder reduziert und ausgedampft, wodurch sich solche Stoffkomponenten im Staub bzw. im aus dem Staub gebildeten Schlamm anreichern.

Zur Vermeidung einer solchen Anreicherung wird zweckmäßig ein Teilstrom des Granulates aus dem Kreislauf ausgeschieden, vorzugsweise nach Durchführung einer Trocknung und vorzugsweise in einer Menge bis maximal 15 %, insbesondere in einer Menge von etwa 10 % der Granulatmenge.

Gemäß einer weiteren bevorzugten Ausführungsform werden sich in der Kreislaufführung anreichernde Komponenten, wie Nicht-Eisenmetalle, Alkalien, abgeschieden, d.h. von der Eisenfraktion abgetrennt.

Eine Anlage zur Durchführung des Verfahrens mit einem Reduktionsreaktor für Eisenerz, einem Einschmelzvergaser, einer den Einschmelzvergaser mit dem Reduktionsreaktor verbindenden Zuleitung für ein im Einschmelzvergaser gebildetes Reduktionsgas, einer den Reduktionsreaktor mit dem Einschmelzvergaser verbindenden Förderleitung für das im Reduktionsreaktor gebildete Reduktionsprodukt, mit einer vom Reduktionsreaktor ausgehenden, durch einen Gaswäscher geführten Exportgas-Ableitung, mit in den Einschmelzvergaser mündenden Zuleitungen für sauerstoffhältige Gase und Kohlenstoffträger, einem am Einschmelzvergaser vorgesehenen Abstich für Roheisen und Schlacke, ist dadurch gekennzeichnet, daß der Gaswäscher mittels einer die in ihm sich sammelnden Schlämme fördernden Förderleitung mit einer Schlammaufbereitungsanlage verbunden ist und die Schlammaufbereitungsanlage mittels einer Fördereinrichtung mit einem Konverter zur Stahlherstellung aus Roheisen sowie gegebenenfalls Schrott und/oder Eisenerz und/oder Eisenschwamm im Sauerstoffblasverfahren gekoppelt ist, wobei die Schlammaufbereitungsanlage eine Eindickeinrichtung, eine Branntkalk dem Schlamm zuführende Einrichtung sowie eine Granulationseinrichtung aufweist, der eine Trockeneinrichtung nachgeordnet ist.

Eine bevorzugte Ausführungsform einer Anlage zur Durchführung des erfindungsgemäßen Verfahrens mit einem Hochofen und einer den Hochofen mit einem Gaswäscher verbindenden Abgasleitung für aus dem Hochofen austretendes Abgas, ist dadurch gekennzeichnet, daß der Gaswäscher mittels einer die in ihm sich sammelnden Schlämme fördernden Förderleitung mit einer Schlammaufbereitungsanlage verbunden ist und die Schlammaufbereitungsanlage mittels einer Fördereinrichtung mit einem Konverter zur Stahlherstellung aus Roheisen sowie gegebenenfalls Schrott und/oder Eisenerz und/oder Eisenschwamm im Sauerstoffblasverfahren gekoppelt ist.

Eine Anlage mit einem Konverter zur Stahlherstellung aus Roheisen sowie gegebenenfalls Schrott und/oder Eisenerz und/oder Eisenschwamm im Sauerstoffblasverfahren und einer den Konverter mit einem Gaswäscher verbindenden Abgasleitung für aus dem Konverter austretendes Abgas, ist dadurch gekennzeichnet, daß der Gaswäscher mittels einer die in ihm sich sammelnden Schlämme fördernden Förderleitung mit einer Schlammaufbereitungsanlage verbunden ist und die Schlammaufbereitungsanlage mittels einer Fördereinrichtung mit dem Konverter gekoppelt ist.

Gemäß einer bevorzugten Ausführungsform ist der Trockeneinrichtung eine Abscheideinrichtung für sich im Kreislauf unerwünscht anreichernde Stoffe, wie Nicht-Eisenmetalle, Alkalien, nachgeordnet, wobei die Abscheideeinrichtung vorteilhaft als beheiztes Drehrohr ausgebildet ist.

Zur Vermeidung einer Aufkonzentration von zur Anreicherung neigenden Komponenten ist es auch möglich, eine Stoffausschleusung über eine Abzweigleitung durchzuführen, die von der die Trockeneinrichtung mit dem Konverter koppelnden Fördereinrichtung abzweigt.

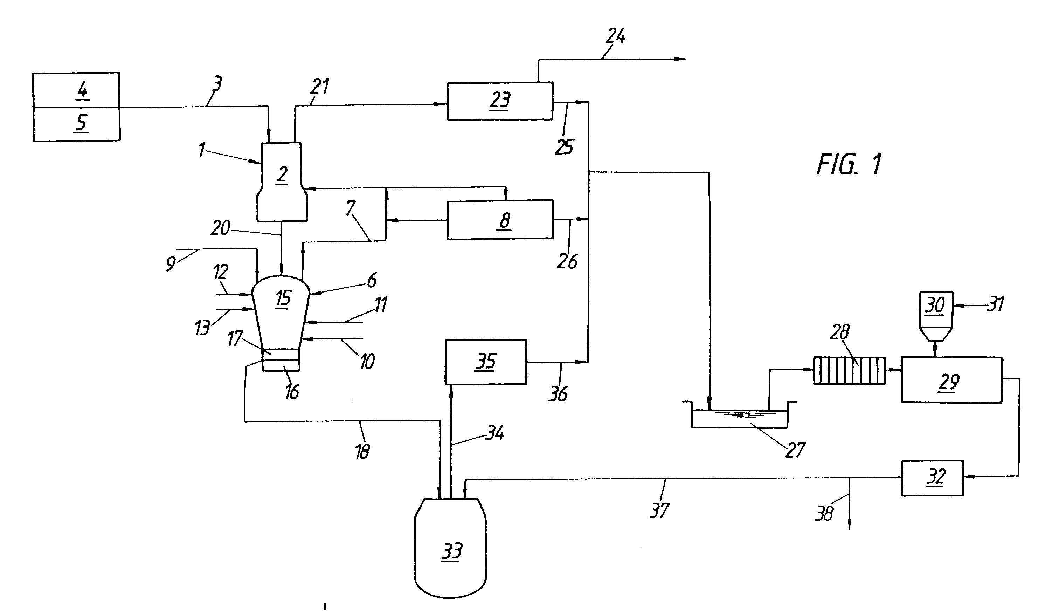

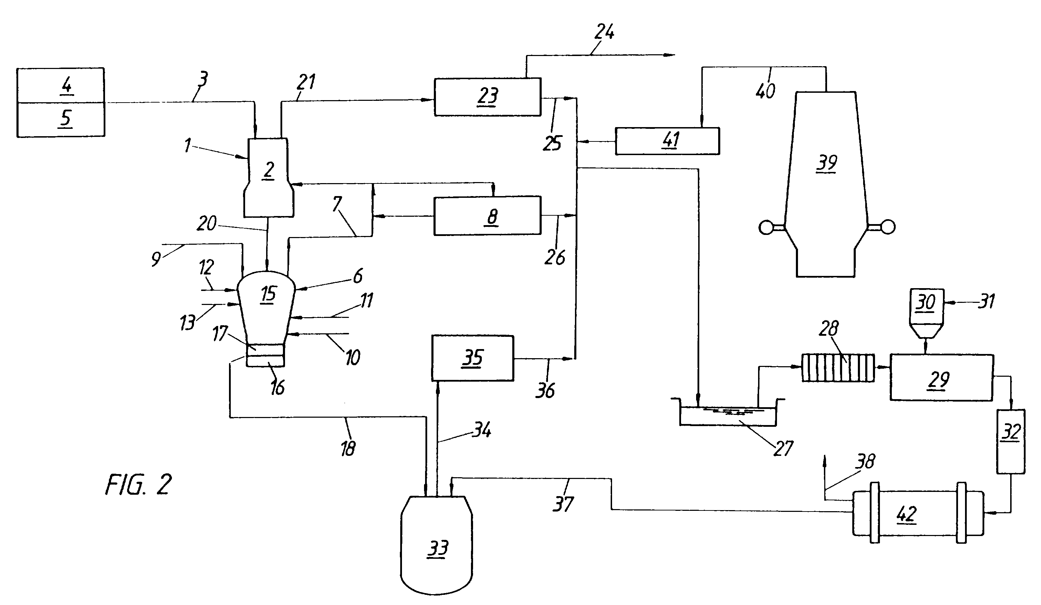

Die Erfindung ist nachfolgend anhand zweier Ausführungsbeispiele näher erläutert, wobei die Fig. 1 und 2 jeweils eine Anlage zur Durchführung des erfindungsgemäßen Verfahrens nach jeweils einer Ausführungsform veranschaulichen.

In eine als Schachtofen 1 ausgebildete Direktreduktionseinrichtung, d.h. in deren Direktreduktionszone 2, werden von oben über eine Zuleitung 3 stückige eisenoxidhältige Einsatzstoffe 4, wie Erz, gegebenenfalls zusammen mit ungebrannten Zuschlägen 5, chargiert.

Der Schachtofen 1 steht mit einem Einschmelzvergaser 6 in Verbindung, in dem aus Kohlenstoffträgern und sauerstoffhältigem Gas ein Reduktionsgas erzeugt wird, welches über eine Zuleitung 7 dem Schachtofen 1 zugeführt wird, wobei in der Zuleitung 7 eine Gasreinigungs- und eine Gaskühlungseinrichtung 8, die als Wäscher ausgebildet ist, vorgesehen sind.

Der Einschmelzvergaser 6 weist eine Zuführung 9 für feste, stückige Kohlenstoffträger, gegebenenfalls mehrere Zuleitungen 10, 11 für sauerstoffhältige Gase und Zuleitungen 12, 13 für bei Raumtemperatur flüssige oder gasförmige Kohlenstoffträger, wie Kohlenwasserstoffe, sowie für gebrannte Zuschläge auf. In dem Einschmelzvergaser 6 sammelt sich unterhalb der Einschmelzvergasungszone 15 schmelzflüssiges Roheisen 16 und schmelzflüssige Schlacke 17, die über einen Abstich 18 abgestochen werden.

Die im Schachtofen 1 in der Direktreduktionszone 2 zu Eisenschwamm reduzierten stückigen Einsatzstoffe werden dem Einschmelzvergaser 6 über eine oder mehrere Leitungen 20 zugeführt, beispielsweise mittels Austragsschnecken. An dem oberen Teil des Schachtofens 1 schließt eine Ableitung 21 für das in der Direktredkutionszone 2 entstehende Topgas an. Dieses Topgas wird einer Gasreinigungseinrichtung 23, die ebenfalls als Wäscher ausgebildet ist, zugeleitet und steht danach über die Exportgasleitung 24 einer weiteren Verwendung zur Verfügung.

Erfindungsgemäß werden beim Vergasungs- und Einschmelzprozeß sowie beim Reduktionsprozeß anfallende Abfallstoffe in den stahlerzeugenden Prozeß eingesetzt bzw. zurückgeführt:

Die in den Wäschern 8 und 23 anfallenden Schlammwässer werden über Schlammwasser-Leitungen 25 und 26 einem als Schlammabsetzbecken 27 ausgebildeten Eindicker und anschließend einer Entwässerungseinrichtung 28, vorzugsweise einer Filterpresse oder einer Dekanterzentrifuge 28, zugeführt, in der die Schlämme auf einen Restfeuchtegehalt von 30 bis 50 Gew.% freies Wasser, vorzugsweise von 32 bis 42 Gew.%, entwässert werden. Der entwässerte Schlamm wird einer als Granulationseinrichtung 29, wie einem Mischgranulator 29, ausgebildeten Agglomerationseinrichtung zugeführt.

In die Granulationseinrichtung 29 mündet eine Branntkalk 30 aus einem Bunker 31 zuführende Leitung. Der freie Wassergehalt des der Granulationseinrichtung 29 zugeführten Schlammes wird mit der Menge und der Korngröße des Branntkalks abgestimmt, wobei Branntkalk in einer Menge zugegeben wird, bei der eine vollständige Umsetzung desselben durch das im entwässerten Schlamm enthaltene freie Wasser stattfindet. Hier wird insbesondere darauf Wert gelegt, daß das Granulat, das nach der Granulationseinrichtung 29 einem Trockner 32 zugeführt wird und dort einer Trocknung auf maximal 5 Gew.% Restfeuchte freies Wasser unterzogen wird, auch nach Lagerung durch einige Zeit hindurch nicht aufquillt bzw. auftreibt. Es darf also im Granulat kein freier Branntkalk mehr enthalten sein. Die Korngröße des Branntkalkes liegt vorteilhaft in einem Bereich bis 1 mm.

Die Festigkeit des getrockneten Granulates soll so hoch sein, daß das Granulat beim nachfolgenden Einsatz in einem Slahlwerkskonverter 33 nicht zerfällt, wobei die Festigkeit wiederum abgestimmt sein muß mit der Korngröße des Granulates. Als besonders vorteilhaft hat sich eine Festigkeit von 10 bis 30 kg/Stück Granulatteilchen bei einer Korngröße von 10 bis 12,5 mm mittlerer Durchmesser eines Granulatteilchens erwiesen.

Von Bedeutung ist noch die Fallzahl, d.h. die Anzahl des von einem Granulatteilchen unbeschädigt überstandenen genormten Fallenlassens dieses Granulatteilchens. Eine Fallzahl im Bereich 5 bis größer 20 nach SME, Mineral processing handbook, hat sich für den Einsatz in einem Stahlwerkskonverter im Zusammenhang mit der oben angegebenen Festigkeit und Korngröße als besonders günstig erwiesen. Die Festigkeit des Grüngranulates, also vor der Trocknung, liegt vorteilhaft zwischen 1,5 bis 7 kg je Stück Granulatteilchen.

Gemäß der in Fig. 1 dargestellten Ausführungsform wird das über einen Abgasschacht 34 abgezogene Abgas des Stahlwerkskonverters, in dem ein Frischprozeß nach dem Sauerstoffblasverfahren (entweder mit einer LD-Lanze oder Unterbackdüsen oder nach einem anderen Verfahren) stattfindet, ebenfalls einem Naßwäscher 35 zugeführt und über die Leitung 36 dem Eindicker, d.h. dem Schlammabsetzbecken 27, zugeführt. Das aus dem Einschmelzvergaser abgestochene Roheisen 16 wird im Konverter eingesetzt.

Um eine Anreicherung von zur Aufkonzentration neigenden Komponenten, wie Nichteisenmetallen bzw. Alkalien, zu vermeiden, wird ein Teil des getrockneten Granualtes mittels einer von einer den Trockner 32 mit dem Konverter 33 verbindenden Fördereinrichtung 37 abzweigenden Zweigleitung 38 ausgetragen. Hier hat sich ein Austrag von etwa 10 % der Menge des Granulates als ausreichend herausgestellt. Das ausgetragene Granulat kann beispielsweise in der Baustoffindustrie eingesetzt werden.

Gemäß der in Fig. 2 dargestellten Anlage ist in den Prozeß zusätzlich noch ein Hochofen 39 integriert, dessen Abgase über eine Leitung 40 ebenfalls einem Naßwäscher 41 und von diesem dem Eindicker 27 zugeführt werden. Ein Ausschleusen von zur Aufkonzentration neigenden Komponenten wird hier durch ein spezifisches Abtrennen in einem dafür geeigneten Apparat, der beispielsweise als beheiztes Drehrohr 42 ausgebildet ist, durchgeführt. Das das Drehrohr 42 durchsetzende Granulat wird anschließend dem Konverter 33 zugeführt. Die für den Hochofenbetrieb und den Konverterbetrieb zusätzlich noch erforderlichen Aggregate bzw. Materialströme, wie z.B. eine Versorgung des Hochofens mit Möller und die Weiterleitung des im Hochofen erzeugten Roheisens in den Konverter, sind bei den dargestellten Ausführungsbeispielen - da für die Erfindung nicht von Bedeutung - der Einfachheit halber weggelassen.

## Patentansprüche

1. Verfahren zum Verwerten von eisenhältigen Hüttenreststoffen, die von eisenhältige Partikel enthaltenden Abgasen im Naßverfahren ausgewaschen und in Form von Schlämmen abgeschieden werden, wobei die Schlämme entwässert und agglomeriert werden und die Agglomerate in einem Ofen zur Stahlerzeugung verwertet werden, dadurch gekennzeichnet, daß die Schlämme auf einen Restfeuchtegehalt von 30 bis 50 Gew.% freies Wasser entwässert, mit Branntkalk gemischt, direkt in eine Granulationseinrichtung aufgegeben und granuliert werden und schließlich ausschließlich in einem nach dem Sauerstoffblasverfahren ablaufenden Frischprozeß zur Herstellung von Stahl aus Roheisen sowie gegebenenfalls Schrott und/oder Eisenerz und/oder Eisenschwamm eingesetzt und verwertet werden.

2. Verfahren nach Anspruch 1, gekennzeichnet durch ein Verwerten von in beim Direktreduzieren von Eisenerz (4) zu Eisenschwamm und beim Einschmelzen von Eisenschwamm unter gleichzeitiger Kohlevergasung entstehenden Abgasen enthaltenen Stäuben.

3. Verfahren nach Anspruch 1 oder 2, gekennzeichnet durch ein Verwerten von in beim Frischen nach dem Sauerstoffblasverfahren entstehenden Abgasen enthaltenen Stäuben.

4. Verfahren nach einem oder mehreren der Ansprüche 1 bis 3, gekennzeichnet durch ein Verwerten von in bei einem Hochofenprozeß entstehenden Abgasen enthaltenen Stäuben.

5. Verfahren nach einem oder mehreren der Ansprüche 1 bis 4, dadurch gekennzeichnet, daß die Schlämme vor einer Weiterbehandlung auf einen Restfeuchtegehalt von 32 bis 42 Gew.% freies Wasser entwässert werden.

6. Verfahren nach einem oder mehreren der Ansprüche 1 bis 5, dadurch gekennzeichnet, daß den Schlämmen mit dem Granulieren Branntkalk (30) in körniger Form bis 1 mm Durchmesser zugesetzt wird.

7. Verfahren nach Anspruch 6, dadurch gekennzeichnet, daß Branntkalk (30) in einer Menge zugegeben wird, bei der eine vollständige Umsetzung desselben durch das im entwässerten Schlamm enthaltene freie Wasser stattfindet.

8. Verfahren nach einem oder mehreren der Ansprüche 1 bis 7, dadurch gekennzeichnet, daß nach dem Granulieren eine Trocknung bis zu einer Restfeuchte von maximal 5 Gew.% freies Wasser durchgeführt wird.

9. Verfahren nach einem oder mehreren der Ansprüche 1 bis 8, dadurch gekennzeichnet, daß ein Teilstrom des Granulates aus dem Kreislauf ausgeschieden wird, vorzugsweise nach Durchführung einer Trocknung und vorzugsweise in einer Menge bis maximal 15 %, insbesondere in einer Menge von etwa 10 % der Granulatmenge.

10. Verfahren nach einem oder mehreren der Ansprüche 1 bis 9, dadurch gekennzeichnet, daß sich in der Kreislaufführung anreichernde Komponenten, wie Nicht-Eisenmetalle, Alkalien, abgeschieden werden.

11. Anlage zur Durchführung des Verfahrens nach einem oder mehreren der Ansprüche 1 bis 10, mit einem Reduktionsreaktor (1) für Eisenerz (4), einem Einschmelzvergaser (6), einer den Einschmelzvergaser (6) mit dem Reduktionsreaktor (1) verbindenden Zuleitung (7) für ein im Einschmelzvergaser (6) gebildetes Reduktionsgas, einer den Reduktionsreaktor (1) mit dem Einschmelzvergaser (6) verbindenden Förderleitung (20) für das im Reduktionsreaktor (1) gebildete Reduktionsprodukt, mit einer vom Reduktionsreaktor (1) ausgehenden, durch einen Gaswäscher (23) geführten Exportgas-Ableitung (21), mit in den Einschmelzvergaser (6) mündenden Zuleitungen (10 bis 13) für sauerstoffhältige Gase und Kohlenstoffträger, einem am Einschmelzvergaser (6) vorgesehenen Abstich (18) für Roheisen (16) und Schlacke (17), dadurch gekennzeichnet, daß der Gaswäscher (23) mittels einer die in ihm sich sammelnden Schlämme fördernden Förderleitung (25) mit einer Schlammaufbereitungsanlage (27 bis 32) verbunden ist und die Schlammaufbereitungsanlage (27 bis 32) mittels einer Fördereinrichtung (37) mit einem Konverter (33) zur Stahlherstellung aus Roheisen (16) sowie gegebenenfalls Schrott und/oder Eisenerz und/oder Eisenschwamm im Sauerstoffblasverfahren gekoppelt ist, wobei die Schlammaufbereitungsanlage (27 bis 32) eine Eindickeinrichtung (27), eine Branntkalk (30) dem Schlamm zuführende Einrichtung (31) sowie eine Granulationseinrichtung (29), aufweist, der eine Trockeneinrichtung (32) nachgeordnet ist.

12. Anlage zur Durchführung des Verfahrens nach einem oder mehreren der Ansprüche 1 bis 10, mit einem Hochofen (39) und einer den Hochofen (39) mit einem Gaswäscher (41) verbindenden Abgasleitung (40) für aus dem Hochofen (39) austretendes Abgas, dadurch gekennzeichnet, daß der Gaswäscher (41) mittels einer die in ihm sich sammelnden Schlämme fördernden Förderleitung mit einer Schlammaufbereitungsanlage (27 bis 32) verbunden ist und die Schlammaufbereitungsanlage (27 bis 32) mittels einer Fördereinrichtung (37) mit einem Konverter (33) zur Stahlherstellung aus Roheisen (16) sowie gegebenenfalls Schrott und/oder Eisenerz und/oder Eisenschwamm im Sauerstoffblasverfahren gekoppelt ist.

13. Anlage zur Durchführung des Verfahrens nach einem oder mehreren der Ansprüche 1 bis 10, mit einem Konverter (33) zur Stahlherstellung aus Roheisen (16) sowie gegebenenfalls Schrott und/oder Eisenerz und/oder Eisenschwamm im Sauerstoffblasverfahren und einer den Konverter mit einem Gaswäscher (35) verbindenden Abgasleitung (34) für aus dem Konverter (33) austretendes Abgas, dadurch gekennzeichnet, daß der Gaswäscher (35) mittels einer die in ihm sich sammelnden Schlämme fördernden Förderleitung (36) mit einer Schlammaufbereitungsanlage (27 bis 32) verbunden ist und die Schlammaufbereitungsanlage (27 bis 32) mittels einer Fördereinrichtung (37) mit dem Konverter (33) gekoppelt ist.

14. Anlage nach einem oder mehreren der Ansprüche 11 bis 13, dadurch gekennzeichnet, daß der Trockeneinrichtung (32) eine Abscheideinrichtung (38, 42) für sich im Kreislauf unerwünscht anreichernde Stoffe, wie Nicht-Eisenmetalle, Alkalien, nachgeordnet ist.

15. Anlage nach Anspruch 14, dadurch gekennzeichnet, daß der Trockeneinrichtung (32) eine als beheiztes Drehrohr (42) ausgebildete Abscheideeinrichtung für zur Anreicherung neigende Komponenten, wie Nichteisen-Metalle, nachgeordnet ist (Fig. 2).

16. Anlage nach einem oder mehreren der Ansprüche 11 bis 14, dadurch gekennzeichnet, daß die die Trockeneinrichtung (32) mit dem Konverter (33) koppelnde Fördereinrichtung (37) eine Abzweigleitung (38) zur Stoffausschleusung eines Teilstromes der getrockneten Granulate aufweist (Fig. 1).

## Claims

1. A method of processing iron-containing metallurgical residual substances washed out from offgases containing iron-containing particles in the wet process and separated in the form of sludges, wherein the sludges are dehydrated and agglomerated and the agglomerates are processed in a furnace for making steel, characterized in that the sludges are dehydrated to a residual moisture content ranging from 30 to 50 wt.% of free water, are mixed with quick lime, are charged directly into a granulation means and granulated, and are finally used and processed exclusively in a refining process according to the oxygen-blowing process, for the production of steel from pig iron as well as, optionally, scrap and/or iron ore and/or sponge iron.

2. A method according to claim 1, characterized by the processing of dusts contained in offgases forming in the direct reduction of iron ore (4) to sponge iron and in the melting of sponge iron under simultaneous coal gasification.

3. A method according to claim 1 or 2, characterized by the processing of dusts contained in offgases forming in refining according to the oxygen-blowing process.

4. A method according to one or several of claims 1 to 3, characterized by the processing of dusts contained in offgases forming in a blast furnace process.

5. A method according to one or several of claims 1 to 4, characterized in that the sludges are dehydrated to a residual moisture content ranging from 32 to 42 wt.% of free water prior to further treatment.

6. A method according to one or several of claims 1 to 5, characterized in that quick lime (30) in a granular form having a diameter of up to 1 mm is added to the sludges during granulation.

7. A method according to claim 6, characterized in that quick lime (30) is added in an amount in which it is completely reacted by the free water contained in the dehydrated sludge.

8. A method according to one or several of claims 1 to 7, characterized in that drying to a residual moisture of 5 wt.% of free water at the most is carried out after granulation.

9. A method according to one or several of claims 1 to 8, characterized in that a partial stream of the granulated material is eliminated from the circulation, preferably after drying has been effected and preferably in an amount up to a maximum of 15 %, in particular in an amount of about 10 % of the amount of granulated material.

10. A method according to one or several of claims 1 to 9, characterized in that components getting enriched during circulation, such as non-iron metals, alkalis, are separated.

11. An arrangement for carrying out the method according to one or several of claims 1 to 10, comprising a reduction reactor (1) for iron ore (4), a melter gasifier (6), a supply duct (7) for a reducing gas formed in the melter gasifier (6), connecting the melter gasifier (6) with the reduction reactor (1), a conveying duct (20) for the reduction product formed in the reduction reactor (1), connecting the reduction reactor (1) with the melter gasifier (6), an export-gas discharge duct (21) departing from the reduction reactor (1) and conducted through a gas scrubber (23), supply ducts (10 to 13) for oxygen-containing gases and carbon carriers running into the melter gasifier (6), a tap (18) for pig iron (16) and slag (17) provided at the melter gasifier (6), characterized in that the gas scrubber (23) is connected with a sludge-treating plant (27 to 32) by means of a conveying duct (25) conveying the sludges collecting within the former and the sludge-treating plant (27 to 32) is coupled by a conveying means (37) with a converter (33) for the production of steel from pig iron (16) as well as, optionally, scrap and/or iron ore and/or sponge iron in the oxygen-blowing process, the sludge-treating plant (27 to 32) having a thickening means (27), a means (31) for supplying quick lime (30) to the sludge, as well as a granulation means (29), followed by a drying means (32).

12. An arrangement for carrying out the method according to one or several of claims 1 to 10, comprising a blast furnace (39) and an offgas duct (40) for offgas emerging from the blast furnace (39), connecting the blast furnace (39) with a gas scrubber (41), characterized in that the gas scrubber (41) is connected with a sludge-treating plant (27 to 32) by means of a conveying duct conveying the sludges collecting within the former and the sludge-treating plant (27 to 32) is coupled by a conveying means (37) with a converter (33) for the production of steel from pig iron (16) as well as, optionally, scrap and/or iron ore and/or sponge iron in the oxygen-blowing process.

13. An arrangement for carrying out the method according to one or several of claims 1 to 10, comprising a converter (33) for the production of steel from pig iron (16) as well as, optionally, scrap and/or iron ore and/or sponge iron in the oxygen-blowing process and an offgas duct (34) for offgas emerging from the converter (33), connecting the converter with a gas scrubber (35), characterized in that the gas scrubber (35) is connected with a sludge-treating plant (27 to 32) by means of a conveying duct (36) conveying the sludges collecting within the former and the sludge-treating plant (27 to 32) is coupled with the converter (33) by a conveying means (37).

14. An arrangement according to one or several of claims 11 to 13, characterized in that the drying means (32) is followed by a separation means (38, 42) for substances undesiredly getting enriched during circulation, such as non-iron metals, alkalis.

15. An arrangement according to claim 14, characterized in that the drying means (32) is followed by a separation means designed as a heated rotary tube (42) for components tending to enrichment, such as non-iron metals (Fig. 2).

16. An arrangement according to one or several of claims 11 to 14, characterized in that the conveying means (37) coupling the drying means (32) with the converter (33) has a branch duct (38) for the outward transfer of a partial stream of the dried granulated material (Fig. 1).

## Revendications

1. Procédé pour valoriser des résidus métallurgiques contenant du fer qui sont retirés de gaz usés contenant des particules contenant du fer par lavage dans le procédé humide et qui sont séparés sous forme de boues, où les boues sont déshydratées et agglomérées et les agglomérats sont valorisés dans un four pour la production de l'acier, caractérisé en ce que les boues sont déshydratées à une teneur en humidité résiduelle de 30 à 50% en masse d'eau libre, sont mélangées avec de la chaux vive, sont introduites directement dans une installation de granulation et sont granulées et enfin sont utilisées et valorisées exclusivement dans un processus d'affinage qui se déroule selon le procédé à l'oxygène pour la production d'acier à partir de fonte brute et éventuellement de ferrailles et/ou de minerai de fer et/ou d'éponge de fer.

2. Procédé selon la revendication 1 caractérisé par une valorisation de poussières contenues dans des gaz usés formés lors de la réduction directe du minerai de fer (4) en éponge de fer et lors de la fusion de l'éponge de fer avec gazéification du charbon simultanée.

3. Procédé selon la revendication 1 ou 2 caractérisé par une valorisation de poussières contenues dans des gaz usés formés lors de l'affinage selon le procédé à l'oxygène.

4. Procédé selon une ou plusieurs des revendications 1 à 3 caractérisé par une valorisation de poussières contenues dans des gaz usés formés lors d'un processus en haut fourneau.

5. Procédé selon une ou plusieurs des revendications 1 à 4 caractérisé en ce que les boues sont déshydratées à une teneur en humidité résiduelle de 32 à 42% en masse d'eau libre avant un traitement ultérieur.

6. Procédé selon une ou plusieurs des revendications 1 à 5 caractérisé en ce que de la chaux vive (30) sous forme granulaire d'un diamètre pouvant atteindre 1 mm est ajoutée aux boues lors de la granulation.

7. Procédé selon la revendication 6 caractérisé en ce que la chaux vive (30) est ajoutée en une quantité pour laquelle il se produit une conversion totale de celle-ci par l'eau libre contenue dans la boue déshydratée.

8. Procédé selon une ou plusieurs des revendications 1 à 7 caractérisé en ce qu'un séchage jusqu'à une humidité résiduelle d'au maximum 5% en masse d'eau libre est réalisé après la granulation.

9. Procédé selon une ou plusieurs des revendications 1 à 8 caractérisé en ce qu'un courant partiel du granulat est séparé du circuit, de préférence après la mise en oeuvre d'un séchage et de préférence en une quantité d'au maximum 15%, en particulier en une quantité d'environ 10% de la quantité de granulat.

10. Procédé selon une ou plusieurs des revendications 1 à 9 caractérisé en ce que les composants qui s'accumulent dans le circuit, comme les métaux non ferreux, les alcalis, sont séparés.

11. Installation pour la mise en oeuvre du procédé selon une ou plusieurs des revendications 1 à 10 avec un réacteur de réduction (1) pour le minerai de fer (4), un gazéificateur de fusion (6), une conduite d'introduction (7) pour un gaz réducteur formé dans le gazéificateur de fusion (6) qui relie le gazéificateur de fusion (6) avec le réacteur de réduction (1), une conduite de transport (20) pour le produit de réduction formé dans le réacteur de réduction (1) qui relie le réacteur de réduction (1) avec le gazéificateur de fusion (6), avec une conduite d'évacuation de gaz d'export (21) sortant du réacteur de réduction (1), traversant un laveur de gaz (23), avec des conduites d'introduction (10 à 13) pour des gaz contenant de l'oxygène et des supports de carbone qui débouchent dans le gazéificateur de fusion (6), un piquage (18) pour la fonte brute (16) et le laitier (17) prévu sur le gazéificateur de fusion (6), caractérisée en ce que le laveur de gaz (23) est relié à une installation de traitement des boues (27 à 32) au moyen d'une conduite de transport (25) transportant les boues qui se rassemblent dans le laveur de gaz et l'installation de traitement des boues (27 à 32) est couplée au moyen d'un dispositif de transport (37) à un convertisseur (33) pour la production d'acier à partir de fonte brute (16) et éventuellement de ferrailles et/ou de minerai de fer et/ou d'éponge de fer dans le procédé à l'oxygène, où l'installation de traitement des boues (27 à 32) comporte un dispositif d'épaississement (27), un dispositif (31) apportant de la chaux vive (30) à la boue et un dispositif de granulation (29) qui est disposé en aval d'un dispositif de séchage (32).

12. Installation pour la mise en oeuvre du procédé selon une ou plusieurs des revendications 1 à 10 avec un haut fourneau (39) et une conduite de gaz usés (40) reliant le haut fourneau (39) à un laveur de gaz (41) pour le gaz usé sortant du haut fourneau (39), caractérisée en ce que le laveur de gaz (41) est relié au moyen d'une conduite de transport transportant les boues qui s'accumulent dans le laveur de gaz à une installation de traitement des boues (27 à 32) et l'installation de traitement des boues (27 à 32) est couplée au moyen d'un dispositif de transport (37) à un convertisseur (33) pour la production d'acier à partir de fonte brute (16) et éventuellement de ferrailles et/ou de minerai de fer et/ou d'éponge de fer dans le procédé à l'oxygène.

13. Installation pour la mise en oeuvre du procédé selon une ou plusieurs des revendications 1 à 10 avec un convertisseur (33) pour la production d'acier à partir de fonte brute (16) et éventuellement de ferrailles et/ou de minerai de fer et/ou d'éponge de fer dans le procédé à l'oxygène et une conduite de gaz usés (34) reliant le convertisseur à un laveur de gaz (35) pour le gaz usé sortant du convertisseur (33), caractérisée en ce que le laveur de gaz (35) est relié au moyen d'une conduite de transport (36) transportant les boues qui s'accumulent dans le laveur de gaz à une installation de traitement des boues (27 à 32) et l'installation de traitement des boues (27 à 32) est couplée au convertisseur (33) au moyen d'un dispositif de transport (37).

14. Installation selon une ou plusieurs des revendications 11 à 13 caractérisée en ce qu'un dispositif de séparation (38, 42) pour les produits qui s'accumulent de manière indésirable dans le circuit, comme les métaux non ferreux, les alcalis, est disposé en aval du dispositif de séchage (32).

15. Installation selon la revendication 14 caractérisée en ce qu'un dispositif de séparation sous forme de tube rotatif chauffé (42) pour les composants ayant tendance à s'accumuler comme les métaux non ferreux, est disposé en aval du dispositif de séchage (32) (fig. 2).

16. Installation selon une ou plusieurs des revendications 11 à 14 caractérisée en ce que le dispositif de transport (37) qui couple le dispositif de séchage (32) au convertisseur (33) comporte une conduite de dérivation (38) pour le retrait par éclusage de produits d'un courant partiel du granulat séché (fig. 1).
